# EUROPEAN PATENT SPECIFICATION

(11) **EP 3 910 822 B1**
(45) Date of publication and mention of the grant of the patent: **01.11.2023**
(21) Application number: 20175095.7
(22) Date of filing: 15.05.2020
(51) Int. Cl.: H04B 17/10, G06N 3/08

(54) **METHOD OF AND DEVICE FOR RECOGNIZING A RADIO FREQUENCY SOURCE**
VERFAHREN UND VORRICHTUNG ZUR ERKENNUNG EINER HOCHFREQUENZQUELLE
PROCÉDÉ ET DISPOSITIF DE RECONNAISSANCE D'UNE SOURCE DE FRÉQUENCE RADIO

(43) Date of publication of application: 17.11.2021
(73) Proprietor: Airbus Defence and Space GmbH, 82024 Taufkirchen (DE)
(72) Inventor: Franke, Andre, 82024 Taufkirchen (DE)
(74) Representative: LKGLOBAL Lorenz & Kopf Patentanwalt Attorney at Law PartG mbB

(56) References cited:
- CN-A- 110 197 212
- US-A1- 2018 324 595
- Hu Xu ET AL: "Unseen Class Discovery in Open-world Classification Lifelong Machine Learning View project Robot Mapping and Planning View project UNSEEN CLASS DISCOVERY IN OPEN-WORLD CLASSIFICATION", , 17 January 2018 (2018-01-17), XP055738235, Retrieved from the Internet: URL:https://www.researchgate.net/profile/H u_Xu6/publication/322568315_Unseen_Class_D iscovery_in_Open-world_Classification/link s/5a9d526caca2721e3f32ae3e/Unseen-Class-Di scovery-in-Open-world-Classification.pdf [retrieved on 2020-10-09]
- O'SHEA TIMOTHY J ET AL: "Spectral detection and localization of radio events with learned convolutional neural features", 2017 25TH EUROPEAN SIGNAL PROCESSING CONFERENCE (EUSIPCO), EURASIP, 28 August 2017 (2017-08-28), pages 331-335, XP033235952, DOI: 10.23919/EUSIPCO.2017.8081223 [retrieved on 2017-10-23]
- HIREMATH SHRISHAIL M ET AL: "Blind Identification of Radio Access Techniques Based on Time-Frequency Analysis and Convolutional Neural Network", TENCON 2018 - 2018 IEEE REGION 10 CONFERENCE, IEEE, 28 October 2018 (2018-10-28), pages 1163-1167, XP033522709, DOI: 10.1109/TENCON.2018.8650355 [retrieved on 2019-02-22]

## Description

### Field of the invention

The invention relates to the identification of radio frequency sources in an environment. In particular, the invention relates to a method of recognizing a radio frequency source as well as a device for recognizing a radio frequency source.

### Technical Background

Nowadays, radio frequency (RF) communication plays an important role and is further driven by new technologies and trends like Internet of Things, autonomous driving, autonomous air traffic, etc. While the awareness for cyber security in terms of secure data exchange of IT systems increases, there is still a lack of awareness for the vulnerability of radio frequency communication and the simplicity of disturbing such supposedly safe IT systems from undesired external access. This is mainly due to the fact that radio frequency signals are invisible and that analyzing the entire radio frequency spectrum at multiple important locations, e.g., in cities, at borders, etc., results in the analysis of a large amount of data. Analyzing the radio frequency spectrum and identifying interferences will become even more important in future to ensure communication services and infrastructure. Common approaches in signal analysis and classification mainly focus on extracting characteristic signal information directly from received radio frequency signals. It often occurs that multiple signals in a wide-band radio frequency spectrum must be analyzed with respect to characteristics like for example frequency, amplitude, phase, pulse width, etc. In this case, all signals are first shifted, i.e., down-converted, to zero frequency before being processed. This is time consuming and requires a large amount of processing power, especially when receiving and analyzing signals from thousands of emitters in a wide-band radio frequency spectrum.

US 2012 / 0 327 921 A1 describes a device for providing radio frequency signal connections for users, wherein the device comprises a plurality of access points which transmit or receive radio frequency signals in different predetermined radio frequency bands and are each connected via a transmission and reception signal path to at least one shared transmitting and receiving antenna.

US 2009 / 0 027 232 A1 describes a radio frequency communication system comprising at least one radio frequency transceiver for transmission and reception according to a VDL mode 3 standard and for reception of status information for a radio frequency communication of said radio frequency transceiver and a first man/machine interface which displays at least one set of configuration information for said radio frequency transceiver device.

US 2018/0324595 A1 describes methods and systems for identifying occupied areas of a radio frequency (RF) spectrum, identifying areas within that RF spectrum that are unusable for further transmissions, and identifying areas within that RF spectrum that are occupied but that may nonetheless be available for additional RF transmissions. Implementation of the method and systems can include the use of multiple deep neural networks (DNNs), such as convolutional neural networks (CNN's), that are provided with inputs in the form of RF spectrograms.

O'SHEA TIMOTHY J. ET AL: "Spectral detection and localization of radio events with learned convolutional neural features", 2017 25TH EUROPEAN SIGNAL PROCESSING CONFERENCE (EUSIPCO), EURASIP, 28 August 2017 (2017-08-28), pages 331-335, describes a method for detecting, localizing and identifying radio transmissions within wide-band time-frequency power spectrograms using feature learning using convolutional neural networks on their 2D image representation.

### Summary of the invention

It may be seen as an object of the invention to reduce the processing effort required for analyzing emitted signals from radio frequency sources.

A method of recognizing a radio frequency source and a device for recognizing a radio frequency source according to the features of the independent claims are provided. The invention is defined by the appended claims.

Further embodiments of the invention are evident from the dependent claims and from the following description.

According to an aspect of the invention, a method of recognizing a radio frequency (RF) source is provided. In a step of the method, a plurality of radio frequency signals is received from respective radio frequency sources located in an environment. Another step of the method comprises generating a radio frequency spectrogram image representing the plurality of radio frequency signals received from the respective radio frequency sources, wherein the radio frequency spectrogram image is the result of graphically representing the plurality of radio frequency signals in one single image.

Another step comprises detecting, for example using a neural network, graphical representations of the plurality of radio frequency signals in individual defined regions within the radio frequency spectrogram image based on an image feature recognition performed on the radio frequency spectrogram image. In another step of the method, a neural network is used for assigning at least some or each one of the detected graphical representations of the plurality of radio frequency signals to a corresponding radio frequency source.

The inventive method may considerably reduce the amount of processing power required for determining the respective radio frequency sources among all the received radio frequency signals. Reducing the amount of processing power is of particular importance when receiving signals from a large number of radio frequency sources where the signals emitted from each of the sources must be identified and analyzed. Using an image feature recognition for detecting the graphical representations of the plurality of different radio frequency signals in individual defined regions within a radio frequency spectrogram image provides the advantage that no received signal has to undergo a separate calculation process, e.g., a down-conversion of the signal in which the frequency of that signal is shifted to zero frequency. Avoiding such a down-conversion for every signal reduces the processing effort of identifying and analyzing radio frequency signals received from the radio frequency sources.

The main advantages of the inventive method may thus be summarized as follows:
Instead of down-converting a frequency of every emitter signal, i.e., source signal, within a wide-band radio frequency spectrum, the wide-band radio frequency spectrum may be converted into a spectrogram, i.e., the radio frequency spectrogram image. This radio frequency spectrogram image is a two-dimensional spectrogram showing the spectral composition including, for example, a pattern and/or color-code, of a signal over time. The spectrogram may then be treated as an image and all emitter signals, instead of only one signal in the base-band, within the spectrogram are extracted and classified by neural network image recognition and classification algorithms. The method may further include a training step of the neural network by providing further spectrogram images of known radio frequency signals, which preferably takes place before the image feature recognition step or in an iterative manner to further develop the neural network.

The radio frequency sources may constitute different objects in the environment, wherein each of the objects emits or transmits one or more radio frequency signals into the environment. For example, a radio frequency signal in the context of the present invention may encompass frequencies from 30 Hz up to 300 GHz. A radio frequency source may be, for example, a computer, a vehicle system, an aircraft system, a spacecraft system, a watercraft system, a radar system, a missile system, a mobile device such as a mobile computer, a mobile phone a tablet computer, etc. All these systems are capable of emitting radio frequency signals into the environment that can be received and analyzed by executing the inventive method.

In a step of the method, a receiver can receive the plurality of radio frequency signals from the respective radio frequency sources located in the environment. Some or each of the received radio frequency signals may constitute signals within a wide-band radio frequency spectrum. A wide-band radio frequency spectrum of some or each of the received radio frequency signals may be converted into a spectrogram, in particular into a radio frequency spectrogram image representing the plurality of radio frequency signals. The radio frequency spectrogram image may thus include some or all the received radio frequency signals as graphical representations thereof. In other words, each received radio frequency signal has its own graphical representation in the radio frequency spectrogram image. The result is a radio frequency spectrogram image in which multiple graphical representations of radio frequency signals are depicted, for example in the form of distinct patterns and/or a color codes for each of the graphical representations. The color code may comprise a black/white information. In this case, the graphical representation may include a grey representation which is based on different ratios of black color information and white color information in different portions of the radio frequency spectrogram image.

The graphical representations in the spectrogram illustrate the frequencies of the different received radio frequency signals as a function of time. Each graphical representation of a radio frequency signal may be allocated to a specified radio frequency signal and thus to a specified radio frequency source.

In particular, the radio frequency spectrogram image may comprise a specified brightness distribution that indicates an amplitude information of a respective radio frequency signal. Furthermore, the spectrogram of a specified radio frequency signal within the radio frequency spectrogram image may comprise a specified shape or form that indicates a phase information of a respective radio frequency signal.

Afterwards, in another step of the method, the neural network may be provided to detect and/or extract the graphical representations of the plurality of radio frequency signals in individual defined regions within the radio frequency spectrogram image based on an image feature recognition performed on the radio frequency spectrogram image. This means that an image feature recognition, which may involve pattern recognition and/or color code recognition, is carried out on the radio frequency spectrogram image to extract features that correspond to a respective radio frequency signal. The individual defined regions may contain the graphical representations of the different radio frequency signals within the radio frequency spectrogram image. In particular, an individual defined region may indicate a limitation or boundary which surrounds one graphical representation such that, when contemplating the radio frequency spectrogram image, a graphical representation of a complete single radio frequency signal may be located within exactly one individual defined region, i.e., be surrounded by the boundaries of that individual defined region.

The neural network may be configured to combine features or feature combinations recognized in the radio frequency spectrogram image against known features or feature combinations and assign the recognized features or feature combinations to a weighing function or weighing factor in order to determine which parts of a graphical representation belong to a respective radio frequency signal and which parts do not belong to the respective radio frequency signal. In this manner, graphical representations distinct for each radio frequency signal may be identified inside the individual defined regions, i.e., inside the boundaries around each graphical representation, within the radio frequency spectrogram image.

As an example, the radio frequency spectrogram image may include a first graphical representation of a first radio frequency signal received from an aircraft system and also include a second graphical representation of a second radio frequency signal received from a missile system. Both radio frequency signals have a different radio frequency spectrum and, thus, a different graphical representation within the radio frequency spectrogram image. In particular, both graphical representations are depicted within different individual defined regions within the radio frequency spectrogram image. Based on the image feature recognition which is performed in at least both of the individual defined regions, the neural network may distinguish the different graphical representations, identify that these different graphical representations belong to different radio frequency signals, and carry out an identification of each of these graphically represented radio frequency signals.

In another step of the method, the neural network assigns or allocates the detected graphical representations of the plurality of radio frequency signals recognized in the different individual defined regions to a corresponding radio frequency source. The assignment or allocation may involve a matching of the graphical representations of the radio frequency spectrogram image to known graphical representations, example from a database or storage. This step may also be referred to as classification of the detected graphical representations of the respective radio frequency signals.

According to an embodiment, a database is provided for storing graphical representations of radio frequency signals or at least image data thereof, wherein assigning the detected graphical representations of the plurality of radio frequency signals to a corresponding radio frequency source comprises comparing the detected graphical representations of the plurality of radio frequency signals with the stored graphical representations/image data of radio frequency signals from the database.

In particular, many graphical representations of different radio frequency sources, i.e., radio frequency spectrograms of base-band signals, may be stored in the database which are used as a basis for identifying the different graphical representations of the radio frequency signals depicted within the generated radio frequency spectrogram image. The assignment may involve an image comparison of stored graphical representations against the graphical representations depicted in each individual defined region within the radio frequency spectrogram image.

According to an embodiment, detecting graphical representations of the plurality of radio frequency signals within the radio frequency spectrogram image comprises detecting a distinct graphical representation of each one of the plurality of radio frequency signals.

This means, that every received radio frequency signal has its own graphical representation, i.e., graphical appearance of features or feature combinations, in the radio frequency spectrogram image. It is possible that each graphical representation lies within a respective individual defined region that constitutes an image part or image portion within the radio frequency spectrogram image.

According to an embodiment, the image feature recognition is performed by identifying an image pattern and/or a color code in the individual defined regions within the radio frequency spectrogram image.

The radio frequency spectrogram image may be systematically scanned in terms of specified patterns and color codes. From the patterns and/or a color codes in the different portions of the radio frequency spectrogram image, i.e., in the different individual defined regions, the graphical representations can be translated or interpreted in order to prepare the assignment of these graphical representations to stored graphical representations or stored image data of known radio frequency signals.

It is noted that a certain graphical representation of a radio frequency signal may be typical for a specified radio frequency source. In this manner, a radio frequency signal indicated by a certain graphical representation within the radio frequency spectrogram image can be unambiguously assigned or allocated to a specified radio frequency source which has the same or at least a similar graphical representation of its radio frequency signal.

According to an embodiment, the image feature recognition is simultaneously performed in at least some or all of the individual defined regions within the radio frequency spectrogram image.

As explained above, multiple individual defined regions are provided, wherein each of these individual defined regions includes a respective one of the graphical representations. Some or each of these individual defined regions may be analyzed by the image feature recognition, for example by pattern recognition and/or color code recognition, at the same time. This accelerates the analysis of the entire radio frequency spectrogram image since the image feature recognition may be simultaneously performed in different parts or portions within the radio frequency spectrogram image.

According to an embodiment, the individual defined regions within the radio frequency spectrogram image are image portions within the radio frequency spectrogram image in which exactly one respective graphical representation of exactly one radio frequency signal is located.

One individual defined region may thus be seen as a boundary that limits the extension of one graphical representation of a respective radio frequency signal within the radio frequency spectrogram image. In other words, since the radio frequency spectrogram image includes a plurality of graphical representations of respective radio frequency signals, the radio frequency spectrogram image may be divided into multiple smaller image parts or image portions, wherein each image part or image portion constitutes its own individual defined region limiting and thus surrounding the respective graphical representations.

According to an embodiment, the method further comprises discarding image portions within the radio frequency spectrogram image in which no graphical representation of a radio frequency signal is detected or expected.

For example, it is possible that only those portions in which a graphical representation has been detected are further considered for assignment to a radio frequency source. Other portions may be neglected, for example by not performing a feature recognition in these portions or by not using these portions for the assignment.

According to an embodiment, the radio frequency spectrogram image represents a wide-band frequency spectrum including the plurality of radio frequency signals received from the respective radio frequency sources.

The radio frequency spectrogram image includes a representation of several radio frequency signals from respective radio frequency sources indicating a specified pattern and/or color code for each respective signal. The radio frequency spectrogram image may thus be a two-dimensional spectrogram showing the spectral composition, e.g., color-coded, of a respective signal over time. This spectrogram may be treated as an image and all emitter signals, instead of only one signal in the base-band, within the spectrogram are extracted and classified by the neural network image recognition and classification algorithms.

According to an embodiment, the method further comprises collecting, e.g., recording, a plurality of spectrograms, wherein each of the plurality of spectrograms represents a base-band frequency spectrum, collecting spectrogram data based on the recorded plurality of spectrograms, and providing the collected spectrogram data as training data to the neural network.

In other words, the neural network is trained with spectrograms of multiple different radio frequency signals, wherein each spectrogram depicts a diagram including a frequency as a function of time. Each spectrogram involves spectrogram data, for example pattern and/or color code, typical for a certain kind of radio frequency signal and therefore also for certain kind of radio frequency source. These different spectrums may then be provided as spectrogram data, i.e., training data, to the database which is used by the neural network in order to assign the detected graphical representations of the plurality of radio frequency signals to a corresponding radio frequency source. The spectrogram data may thus be provided as training data to the neural network in order to train the neural network such that the assignment of graphical representations of radio frequency signals to a corresponding radio frequency source can be improved, for example in terms of quantity and/or quality.

According to an embodiment, each step of the inventive method is performed without a down-conversion of a frequency of any of the plurality of radio frequency signals received from the respective radio frequency sources.

It is thus possible to considerably reduce the processing effort for identifying and analyzing the different received signals to allocate a corresponding radio frequency source. Instead of down-converting every emitter signal within a wide-band radio frequency spectrum to a zero frequency state, the wide-band radio frequency spectrum is converted into a spectrogram, i.e., the radio frequency spectrogram image, that represents a two-dimensional spectrogram showing the spectral composition of the different radio frequency signals over time. This spectrogram is then analyzed using an image feature recognition functionality.

According to an embodiment, the method further comprises identifying detected graphical representations of the plurality of radio frequency signals for which an assignment to a corresponding radio frequency source cannot be performed in order to provide a set of unknown graphical representations.

In case the image feature recognition performed on the radio frequency spectrogram image is unsuccessful for certain parts or portions within the radio frequency spectrogram image, an information may be outputted to a user indicating that a detected graphical representation cannot be identified and/or analyzed. This may happen if the database does not store any comparable graphical representation or image data based on which the assignment of the detected graphical representation of the radio frequency signal to a corresponding radio frequency source could be carried out. In other words, the inventive method may further provide an automatic anomaly detection, for example to detect unknown objects with unknown radio frequency emission in order to enable a fast reaction after such an anomaly detection.

According to an embodiment, the set of unknown graphical representations and a self-learning algorithm are used to generate rules for assigning each of the unknown graphical representations to a corresponding radio frequency source.

By using multiple collected data of the unknown graphical representations, rules for the assignment can be developed based on self-learning. These rules may be developed by inputting also data of previous successful assignments. Furthermore, new spectrograms of respective radio frequency signals may be provided as input data which can also be used to further develop the assignment step by the neural network.

According to an embodiment, assigning the detected graphical representations of the plurality of radio frequency signals to a corresponding radio frequency source comprises using a probability value indicative of a probability with which a detected graphical representation of a radio frequency signal corresponds to a radio frequency source.

For example, if an unambiguous assignment cannot be carried out due to differences between a detected graphical representation and stored graphical representations or image data, the probability value nevertheless enables the assignment of said detected graphical representation of the respective radio frequency signal to a corresponding radio frequency source, for example when exceeding a probability threshold value which is a prerequisite for carrying out the assignment.

According to an embodiment, the radio frequency source is selected from a group, the group comprising a radar, a ground vehicle, an aerial vehicle, a water vehicle, a missile system and a portable mobile device.

According to an aspect of the invention, a device for recognizing a radio frequency source is provided. The device comprises a receiving unit configured to receive a plurality of radio frequency signals from respective radio frequency sources located in an environment. The device further comprises a processing unit configured to generate a radio frequency spectrogram image representing the plurality of radio frequency signals received from the respective radio frequency sources, wherein the radio frequency spectrogram image is the result of graphically representing the plurality of radio frequency signals in one single image. The processing unit is configured to detect graphical representations of the plurality of radio frequency signals in individual defined regions within the radio frequency spectrogram image based on an image feature recognition performed on the radio frequency spectrogram image. The detection may be carried out using a neural network. The processing unit is further configured to use a/the neural network for assigning at least some or each one of the detected graphical representations of the plurality of radio frequency signals to a corresponding radio frequency source.

### Brief description of the drawings

The present invention will hereinafter be described in conjunction with the following drawing figures, wherein like numerals denote like elements, and wherein:
- Fig. 1: shows a schematic of different steps of a method of recognizing a radio frequency source according to an exemplary embodiment.
- Fig. 2: shows a flow diagram of a method of recognizing a radio frequency source according to an exemplary embodiment.
- Fig. 3: shows a device for recognizing radio frequency sources in an environment according to an exemplary embodiment.

### Detailed description of exemplary embodiments

The representations and illustrations in the drawings are schematic and not to scale. A better understanding of the method and device described above may be obtained through a review of the illustrations accompanying this application together with a review of the detailed description that follows.

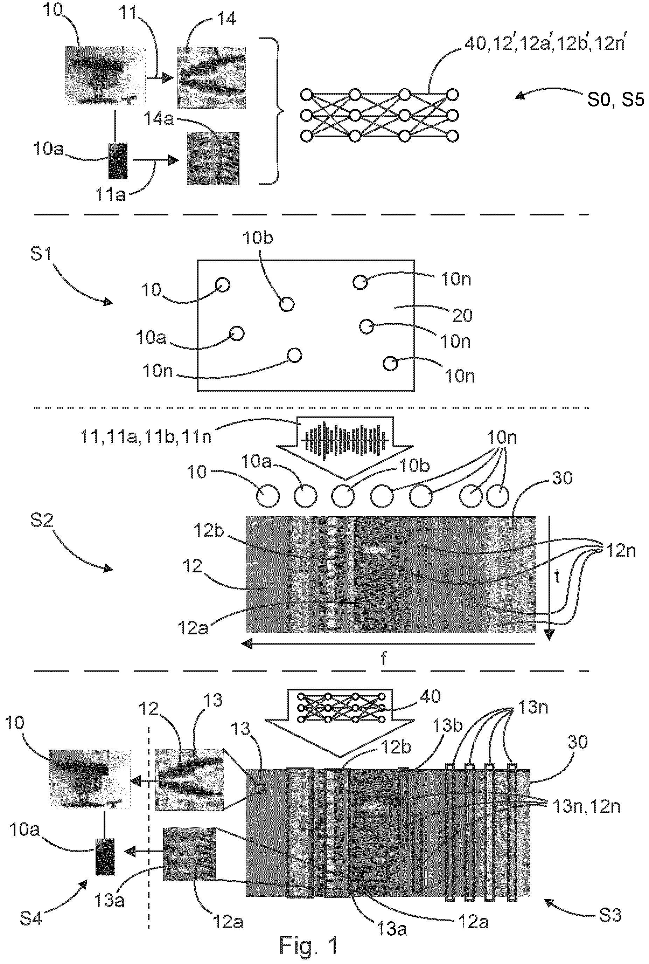

Fig. 1 shows a schematic of different steps S0, S1, S2, S3, S4, S5 of a method of recognizing a radio frequency source 10, wherein the steps S0, S1, S2, S3, S4, S5 are separated from each other by dotted lines. If a reference sign is accompanied by the letter "n", this may indicate that multiple further units or elements of the same type may be present.

In a step S1 of the method, a plurality of radio frequency signals is received from respective radio frequency sources 10, 10a, 10b, 10n located in an environment 20. The environment 20 may be an area or a space extending around a receiving unit (not shown) which receives the radio frequency signals of the environment 20.

In another step S2, a radio frequency spectrogram image 30 is generated. The radio frequency spectrogram image 30 represents the plurality of radio frequency signals 11, 11a, 11b, 11n received from the respective radio frequency sources 10, 10a, 10b, 10n. The representations of the radio frequency signals 11, 11a, 11b, 11n in the radio frequency spectrogram image 30 constitute graphical representations 12, 12a, 12b, 12n of a wide-band frequency spectrum in which the frequencies f are depicted as a function of time t. In other words, the radio frequency spectrogram image 30 is the result of graphically representing the plurality of radio frequency signals 11, 11a, 11b, 11n in one single image. The graphical representations 12, 12a, 12b, 12n include image features or image feature combinations, for example pattern information and/or color code information.

In another step S3, a neural network 40 is provided for detecting graphical representations 12, 12a, 12b, 12n of the plurality of radio frequency signals 11, 11a, 11b, 11n in individual defined regions 13, 13a, 13b, 13n within the radio frequency spectrogram image 30 based on an image feature recognition performed on the radio frequency spectrogram image 30. This is, the neural network 40 processes the generated radio frequency spectrogram image 30 by scanning it and detecting, i.e., identifying, the graphical representations 12, 12a, 12b, 12n, each of which is unique for a respective received radio frequency signal 11, 11a, 11b, 11n. Each of the individual defined regions 13, 13a, 13b, 13n within the radio frequency spectrogram image 30 is an image portion within the radio frequency spectrogram image 30 in which one respective graphical representation 12, 12a, 12b, 12n of one respective radio frequency signal 11, 11a, 11b, 11n is identified. The individual defined regions 13, 13a, 13b, 13n may be smaller image parts or image regions located within the radio frequency spectrogram image 30 as shown in Fig. 1. Some of the individual defined regions 13, 13a, 13b, 13n may overlap each other, they may lie next to each other and/or they may be separated by image parts or image regions in which no graphical representation 12, 12a, 12b, 12n can be detected. It is possible that the neural network 40 only processes and considers those portions of the radio frequency spectrogram image 30 that include or are likely to include a graphical representation 12, 12a, 12b, 12n of a respective radio frequency signal 11, 11a, 11b, 11n. The detection and/or extraction of the graphical representations 12, 12a, 12b, 12n may rely on the assumption that the recognized image features, i.e., the respective image pattern and/or image color code within the individual defined regions 13, 13a, 13b, 13n resemble or are typical for graphical representations of known radio frequency signals. All remaining image portions of the radio frequency spectrogram image 30, i.e., image portions lying outside the individual defined regions 13, 13a, 13b, 13n may be discarded during the image feature recognition processing by the neural network.

Although Fig. 1 shows the individual defined regions 13, 13a, 13b, 13n as overlapping the outer boundaries of the radio frequency spectrogram image 30, it is preferably the case that the individual defined regions 13, 13a, 13b, 13n are completely located inside these outer boundaries of the radio frequency spectrogram image 30.

In another step S4, the neural network is further used for assigning the detected graphical representations 12, 12a, 12b, 12n of the plurality of radio frequency signals 11, 11a, 11b, 11n to a corresponding radio frequency source 10, 10a, 10b, 10n. This assignment may be based on known graphical representations 12', 12a', 12b', 12n', i.e., radio frequency spectrograms, of known radio frequency signals. The assignment step S4 of Fig. 1 is exemplarily shown for the two graphical representations 12, 12a which are detected in and/or extracted from individual regions 13, 13a, respectively. The upper detected/extracted graphical representation 12 in Fig. 1 is assigned to a radar system, whereas the lower detected/extracted graphical representation 12a in Fig. 1 is assigned to a mobile device, e.g., a mobile GNSS (Global Navigation satellite System) jammer.

The method may include an initial step S0 in which a database is provided that stores known graphical representations 12', 12a', 12b', 12n' of radio frequency signals 11, 11a, 11b, 11n. The assignment of the detected graphical representations 12, 12a, 12b, 12n of the plurality of radio frequency signals 11, 11a, 11b, 11n to a corresponding radio frequency source 10, 10a, 10b, 10n (step S4 described above) comprises comparing the detected graphical representations 12, 12a, 12b, 12n of the plurality of radio frequency signals 11, 11a, 11b, 11n with the stored graphical representations 12', 12a', 12b', 12n' of radio frequency signals from the database.

As explained above, the comparison of detected graphical representation 12 and another detected graphical representation 12a is illustrated in Fig. 1. This means that the neural network 40 carries out the assignment step S4 and compares both graphical representations 12, 12a to known graphical representations 12', 12a', each of which is typical for a known radio frequency source. The neural network can then assign the detected/extracted graphical representations 12, 12a to a corresponding radio frequency source 10, 10a. This step S4 may also be referred to as classification of the detected graphical representations 12, 12a. The radio frequency sources 10, 10a may be considered as recognized radio frequency sources 10, 10a.

It is noted that, while the example shown in Fig. 1 exemplarily shows the classification of two detected graphical representations 12, 12a, the method steps described herein may also be carried out for assigning, i.e., classifying and recognizing more than two, e.g., an arbitrary number of graphical representations 12, 12a, 12b, 12n to corresponding radio frequency sources 10, 10a, 10b, 10n.

In addition, the method may comprise another step S5 which may be carried out simultaneously and/or supplementary to the initial step S0 explained above. Step S5 comprises recording a plurality of spectrograms 14, 14a, wherein each of the plurality of spectrograms 14, 14a represents a base-band frequency spectrum. Step S5 further comprises collecting spectrogram data based on the recorded plurality of spectrograms 14, 14a and providing the collected spectrogram data to the neural network 40, for example as training data, in order to improve the assignment capabilities of step S4. In particular, these collected spectrogram data may be used to train the database with information and data of known graphical representations 12', 12a', 12b', 12n' of known radio frequency signals.

It is noted that the method steps S0, S1, S2, S, S4, S5 may be sequentially carried out in the order as described with regard to Fig. 1.

The inventive method avoids a frequency down-conversion of different radio frequency signals and allows monitoring and interference detection within a wide-band frequency spectrum with thousands of radio frequency signals in real-time without using dedicated high-performance computing. In particular, the method enables an automatic emitter classification, an automatic anomaly detection and a fast and real-time processing of a wide frequency spectrum.

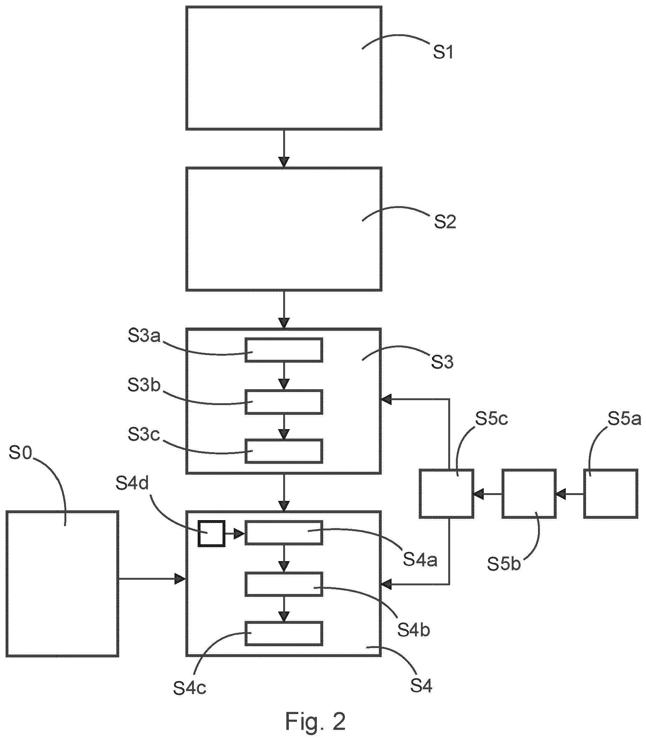

Fig. 2 shows a flow diagram of a method of recognizing a radio frequency source. The method shown in Fig. 2 may include the same steps S0, S1, S2, S3, S4, S5 explained with regard to Fig. 1 above. For the sake of completeness, the steps S0, S1, S2, S3, S4, S5 of the method are briefly repeated while emphasis is given to the additional optional steps S3a, S3b, S3c, S4a, S4b, S4c, S4d, S5a, S5b, S5c.

A step S0 comprises providing a database storing graphical representations 12', 12a', 12b', 12n' of known radio frequency signals.

A step S1 comprises receiving a plurality of radio frequency signals 11, 11a, 11b, 11n from respective radio frequency sources 10, 10a, 10b, 10n located in an environment 20.

A step S2 comprises generating a radio frequency spectrogram image 30 representing the plurality of radio frequency signals 11, 11a, 11b, 11n received from the respective radio frequency sources 10, 10a, 10b, 10n.

A step S3 comprises providing a neural network 40 for detecting graphical representations 12, 12a, 12b, 12n of the plurality of radio frequency signals 11, 11a, 11b, 11n in individual defined regions 13, 13a, 13b, 13n within the radio frequency spectrogram image 30 based on an image feature recognition performed on the radio frequency spectrogram image 30.

The step S3 may comprise the further step S3a in which a distinct graphical representation 12, 12a, 12b, 12n of each one of the plurality of radio frequency signals 11, 11a, 11b, 11n is detected.

The step S3 may include the further step S3b that comprises performing the image feature recognition by identifying an image pattern and/or a color code in the respective individual defined regions 13, 13a, 13b, 13n within the radio frequency spectrogram image 30.

The step S3 may include the further step S3c that comprises discarding image portions within the radio frequency spectrogram image 30 in which no graphical representation 12, 12a, 12b, 12n of a radio frequency signal 11, 11a, 11b, 11n is detected.

A step S4 comprises using the neural network 40 for assigning at least some of the detected graphical representations 12, 12a, 12b, 12n of the plurality of radio frequency signals 11, 11a, 11b, 11n to a corresponding radio frequency source 10, 10a, 10b, 10n.

The step S4 may include a step S4a in which the detected graphical representations 12, 12a, 12b, 12n of the plurality of radio frequency signals 11, 11a, 11b, 11n are compared with the stored graphical representations 12', 12a', 12b', 12n' of known radio frequency signals from the database.

The step S4 may include the further step S4b that comprises identifying detected graphical representations 12, 12a, 12b, 12n of the plurality of radio frequency signals 11, 11a, 11b, 11n for which an assignment to a corresponding radio frequency source 10, 10a, 10b, 10n cannot be performed such that a set of unknown graphical representations is provided. If the image feature recognition performed on the radio frequency spectrogram image 30 (see step S3 described above) is unsuccessful for certain parts or portions within the radio frequency spectrogram image 30, an information may be outputted to a user indicating that a detected graphical representation cannot be identified and analyzed. This may be the case if the database does not provide known graphical representations based on which the assignment of the detected graphical representation 12, 12a, 12b, 12n of the radio frequency signal 11, 11a, 11b, 11n to a corresponding radio frequency source 10, 10a, 10b, 10n could be carried out.

The step S4 may include the further step S4c that comprises using the set of unknown graphical representations and a self-learning algorithm to generate rules for assigning the unknown graphical representations to a corresponding radio frequency source 10, 10a, 10b, 10n. This means that the method provides a self-learning function to further develop the recognition capabilities for yet unknown graphical representations.

The step S4 may include the further step S4d that comprises using a probability value indicative of a probability with which a detected graphical representation 12, 12a, 12b, 12n of a radio frequency signal 11, 11a, 11b, 11n corresponds to a radio frequency source 10, 10a, 10b, 10n. If an unambiguous assignment cannot be carried out due to differences between detected graphical representations 12, 12a, 12b, 12n and the stored graphical representations 12', 12a', 12b', 12n', the probability value still enables an assignment of some or all of detected graphical representations 12, 12a, 12b, 12n of the respective radio frequency signals 11, 11a, 11b, 11n to corresponding radio frequency sources 10, 10a, 10b, 10n.

A step S5a comprises recording a plurality of spectrograms 14, 14a (cf. Fig. 1), wherein each of the plurality of spectrograms 14, 14a represents a base-band frequency spectrum.

A step S5b comprises collecting spectrogram data based on the recorded plurality of spectrograms 14, 14a.

A step S5c comprises providing the collected spectrogram data to the neural network 40. These collected spectrogram data may be used to train the database with information and data of known graphical representations 12', 12a', 12b', 12n' of known radio frequency signals.

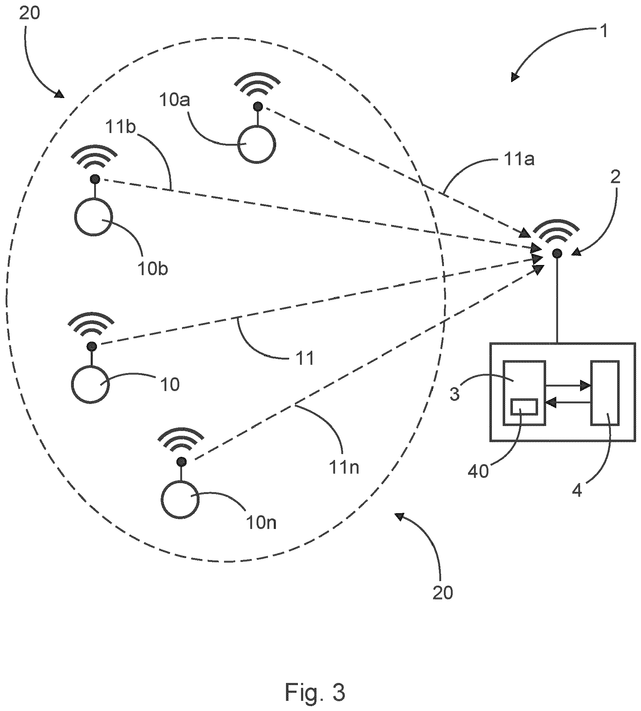

The method as described in Fig. 3 may be carried out in the illustrated order.

Fig. 3 shows a device 1 for recognizing a radio frequency source 10, in particular a plurality of radio frequency sources 10, 10a, 10b, 10n. The device 1 may be configured to carry out the method steps as described with regard to Figures 1 and 2 above. The device 1 comprises a receiving unit 2 configured to receive a plurality of radio frequency signals 11, 11a, 11b, 11n from the radio frequency sources 10, 10a, 10b, 10n located in the environment 20. The device 1 further comprises a processing unit 3 configured to generate a radio frequency spectrogram image 30 representing the plurality of radio frequency signals 11, 11a, 11b, 11n received from the respective radio frequency sources 10, 10a, 10b, 10n. The processing unit 3 is further configured to provide and execute a neural network 40 for detecting graphical representations 12, 12a, 12b, 12n of the plurality of radio frequency signals 11, 11a, 11b, 11n in individual defined regions 13, 13a, 13b, 13n within the radio frequency spectrogram image 30 based on an image feature recognition performed on the radio frequency spectrogram image 30. The processor 3 is further configured to use the neural network 40 for assigning the detected graphical representations 12, 12a, 12b, 12n of the plurality of radio frequency signals 11, 11a, 11b, 11n to a corresponding radio frequency source 10, 10a, 10b, 10n. Therefore, the processing unit 3 may be configured to provide a database 4 storing graphical representations 12', 12a', 12b', 12n' of known radio frequency signals 11, 11a, 11b, 11n such that the processing unit 3 can carry out the assignment by comparing the detected graphical representations 12, 12a, 12b, 12n of the plurality of radio frequency signals 11, 11a, 11b, 11n with the stored graphical representations 12', 12a', 12b', 12n' of the known radio frequency signals 11, 11a, 11b, 11n from the database 4.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims. Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

## Claims

1. Method of recognizing a radio frequency source (10), comprising:
Receiving a plurality of radio frequency signals (11, 11a, 11b, 11n) from respective radio frequency sources (10, 10a, 10b, 10n) located in an environment (20, S1);
Generating a radio frequency spectrogram image (30) representing the plurality of radio frequency signals (11, 11a, 11b, 11n) received from the respective radio frequency sources (10, 10a, 10b, 10n, S2), wherein the radio frequency spectrogram image (30) is the result of graphically representing the plurality of radio frequency signals (11, 11a, 11b, 11n) in one single image;
Detecting graphical representations (12, 12a, 12b, 12n) of the plurality of radio frequency signals (11, 11a, 11b, 11n) in individual defined regions (13, 13a, 13b, 13n) within the radio frequency spectrogram image (30) based on an image feature recognition performed on the radio frequency spectrogram image (30, S3);
Using a neural network (40) for assigning at least some of the detected graphical representations (12, 12a, 12b, 12n) of the plurality of radio frequency signals (11, 11a, 11b, 11n) to a corresponding radio frequency source (10, 10a, 10b, 10n, S4).

2. Method of claim 1, comprising:
Providing a database (4) storing graphical representations (12', 12a', 12b', 12n') of radio frequency signals (11, 11a, 11b, 11n, S0);
wherein assigning the detected graphical representations (12, 12a, 12b, 12n) of the plurality of radio frequency signals (11, 11a, 11b, 11n) to a corresponding radio frequency source (10, 10a, 10b, 10n) comprises:
Comparing the detected graphical representations (12, 12a, 12b, 12n) of the plurality of radio frequency signals (11, 11a, 11b, 11n) with the stored graphical representations (12', 12a', 12b', 12n') of radio frequency signals (11, 11a, 11b, 11n) from the database (4, S4a).

3. Method of any one of the preceding claims,
wherein detecting graphical representations (12, 12a, 12b, 12n) of the plurality of radio frequency signals (11, 11a, 11b, 11n) comprises:
Detecting a distinct graphical representation (12, 12a, 12b, 12n) of each one of the plurality of radio frequency signals (11, 11a, 11b, 11n, S3a).

4. Method of any one of the preceding claims, comprising:
Performing the image feature recognition by identifying an image pattern and/or a color code in the individual defined regions (13, 13a, 13b, 13n) within the radio frequency spectrogram image (30, S3b).

5. Method of any one of the preceding claims,
wherein the image feature recognition is simultaneously performed in at least some of the individual defined regions (13, 13a, 13b, 13n) within the radio frequency spectrogram image (30).

6. Method of any one of the preceding claims,
wherein each of the individual defined regions (13, 13a, 13b, 13n) within the radio frequency spectrogram image (30) is an image portion within the radio frequency spectrogram image (30) in which one respective graphical representation (12) of one radio frequency signal (11) is located.

7. Method of any one of the preceding claims, comprising
Discarding image portions within the radio frequency spectrogram image (30) in which no graphical representation (12, 12a, 12b, 12n) of a radio frequency signal (11, 11a, 11b, 11n) is detected (S3c).

8. Method of any one of the preceding claims,
wherein the radio frequency spectrogram image (30) represents a wide-band frequency spectrum including the plurality of radio frequency signals (11, 11a, 11b, 11n) received from the respective radio frequency sources (10, 10a, 10b, 10n).

9. Method of any one of the preceding claims, comprising:
Collecting a plurality of spectrograms (14, 14a), wherein each of the plurality of spectrograms represents a base-band frequency spectrum (S5a);
Collecting spectrogram data based on the recorded plurality of spectrograms (14, 14a, S5b);
Providing the collected spectrogram data as training data to the neural network (40, S5c).

10. Method of any one of the preceding claims,
wherein each step (S1, S2, S3, S4) of the method is performed without a down-conversion of a frequency of any of the plurality of radio frequency signals (11, 11a, 11b, 11n) received from the respective radio frequency sources (10, 10a, 10b, 10n).

11. Method of any one of the preceding claims, comprising:
Identifying detected graphical representations (12, 12a, 12b, 12n) of the plurality of radio frequency signals (11, 11a, 11b, 11n) for which an assignment to a corresponding radio frequency source (10, 10a, 10b, 10n) cannot be performed in order to provide a set of unknown graphical representations (S4b).

12. Method of claim 11, comprising
Using the set of unknown graphical representations and a self-learning algorithm to generate rules for assigning each of the unknown graphical representations to a corresponding radio frequency source (10, 10a, 10b, 10n, S4c).

13. Method of any one of the preceding claims,
wherein assigning the detected graphical representations (12, 12a, 12b, 12n) of the plurality of radio frequency signals (11, 11a, 11b, 11n) to a corresponding radio frequency source (10, 10a, 10b, 10n) comprises:
Using a probability value indicative of a probability with which a detected graphical representation (12, 12a, 12b, 12n) of a radio frequency signal (11, 11a, 11b, 11n) corresponds to a radio frequency source (10, 10a, 10b, 10n, S4d).

14. Method of any one of the preceding claims,
wherein the radio frequency source (10, 10a, 10b, 10n) is selected from a group, the group comprising a radar, a ground vehicle, an aerial vehicle, a water vehicle, a missile system and a portable mobile device.

15. Device (1) for recognizing a radio frequency source (10), comprising:
a receiving unit (2) configured to receive a plurality of radio frequency signals (11, 11a, 11b, 11n) from respective radio frequency sources (10, 10a, 10b, 10n) located in an environment (20);
a processing unit (3) configured to generate a radio frequency spectrogram image (30) representing the plurality of radio frequency signals (11, 11a, 11b, 11n) received from the respective radio frequency sources (10, 10a, 10b, 10n), wherein the radio frequency spectrogram image (30) is the result of graphically representing the plurality of radio frequency signals (11, 11a, 11b, 11n) in one single image;
wherein the processing unit (3) is further configured to detect graphical representations (12, 12a, 12b, 12n) of the plurality of radio frequency signals (11, 11a, 11b, 11n) in individual defined regions (13, 13a, 13b, 13n) within the radio frequency spectrogram image (30) based on an image feature recognition performed on the radio frequency spectrogram image (30);
wherein the processing unit (3) is further configured to use a neural network (40) for assigning at least some of the detected graphical representations (12, 12a, 12b, 12n) of the plurality of radio frequency signals (11, 11a, 11b, 11n) to a corresponding radio frequency source (10, 10a, 10b, 10n).

## Patentansprüche

1. Verfahren zum Erkennen einer Hochfrequenzquelle (10), umfassend:
Empfangen einer Vielzahl von Hochfrequenzsignalen (11, 11a, 11b, 11n) von entsprechenden Hochfrequenzquellen (10, 10a, 10b, 10n), die sich in einer Umgebung (20, S1) befinden;
Erzeugen eines Hochfrequenzspektrogrammbildes (30), das die Vielzahl von Hochfrequenzsignalen (11, 11a, 11b, 11n) darstellt, die von den jeweiligen Hochfrequenzquellen (10, 10a, 10b, 10n, S2) empfangen werden, wobei das Hochfrequenzspektrogrammbild (30) das Ergebnis von grafischer Darstellung der Vielzahl von Hochfrequenzsignalen (11, 11a, 11b, 11n) in einem einzigen Bild ist;
Erkennen von grafischen Darstellungen (12, 12a, 12b, 12n) der Vielzahl von Hochfrequenzsignalen (11, 11a, 11b, 11n) in einzelnen definierten Bereichen (13, 13a, 13b, 13n) innerhalb des Hochfrequenzspektrogrammbildes (30) auf der Grundlage einer Bildmerkmalerkennung, die am Hochfrequenzspektrogrammbild (30, S3) durchgeführt wird;
Verwenden eines neuronalen Netzes (40) zum Zuordnen mindestens einiger der erkannten grafischen Darstellungen (12, 12a, 12b, 12n) der Vielzahl von Hochfrequenzsignalen (11, 11a, 11b, 11n) zu einer entsprechenden Hochfrequenzquelle (10, 10a, 10b, 10n, S4) .

2. Verfahren nach Anspruch 1, umfassend:
Bereitstellen einer Datenbank (4), die grafische Darstellungen (12', 12a', 12b', 12n') von Hochfrequenzsignalen (11, 11a, 11b, 11n, S0) speichert;
wobei das Zuordnen der erkannten grafischen Darstellungen (12, 12a, 12b, 12n) der Vielzahl von Hochfrequenzsignalen (11, 11a, 11b, 11n) zu einer entsprechenden Hochfrequenzquelle (10, 10a, 10b, 10n) umfasst:
Vergleichen der erkannten grafischen Darstellungen (12, 12a, 12b, 12n) der Vielzahl von Hochfrequenzsignalen (11, 11a, 11b, 11n) mit den gespeicherten grafischen Darstellungen (12', 12a', 12b', 12n') von Hochfrequenzsignalen (11, 11a, 11b, 11n) aus der Datenbank (4, S4a).

3. Verfahren nach einem der vorhergehenden Ansprüche, wobei das Erkennen von grafischen Darstellungen (12, 12a, 12b, 12n) der Vielzahl von Hochfrequenzsignalen (11, 11a, 11b, 11n) umfasst:
Erkennen einer eindeutigen grafischen Darstellung (12, 12a, 12b, 12n) jedes einzelnen der Vielzahl von Hochfrequenzsignalen (11, 11a, 11b, 11n, S3a).

4. Verfahren nach einem der vorhergehenden Ansprüche, umfassend:
Durchführen der Bildmerkmalerkennung durch Identifizieren eines Bildmusters und/oder eines Farbcodes in den einzelnen definierten Bereichen (13, 13a, 13b, 13n) innerhalb des Hochfrequenzspektrogrammbildes (30, S3b).

5. Verfahren nach einem der vorhergehenden Ansprüche, wobei die Bildmerkmalerkennung gleichzeitig in mindestens einigen der einzelnen definierten Bereiche (13, 13a, 13b, 13n) innerhalb des Hochfrequenzspektrogrammbildes (30) durchgeführt wird.

6. Verfahren nach einem der vorhergehenden Ansprüche, wobei jeder der einzelnen definierten Bereiche (13, 13a, 13b, 13n) innerhalb des Hochfrequenzspektrogrammbildes (30) ein Bildanteil innerhalb des Hochfrequenzspektrogrammbildes (30) ist, in dem sich jeweils eine grafische Darstellung (12) eines Hochfrequenzsignals (11) befindet.

7. Verfahren nach einem der vorhergehenden Ansprüche, umfassend:
Verwerfen von Bildanteilen innerhalb des Hochfrequenzspektrogrammbildes (30), in denen keine grafische Darstellung (12, 12a, 12b, 12n) eines Hochfrequenzsignals (11, 11a, 11b, 11n) erkannt wird (S3c) .

8. Verfahren nach einem der vorhergehenden Ansprüche, wobei das Hochfrequenzspektrogrammbild (30) ein breitbandiges Frequenzspektrum darstellt, das die Vielzahl von Hochfrequenzsignalen (11, 11a, 11b, 11n) beinhaltet, die von den jeweiligen Hochfrequenzquellen (10, 10a, 10b, 10n) empfangen werden.

9. Verfahren nach einem der vorhergehenden Ansprüche, umfassend:
Sammeln einer Vielzahl von Spektrogrammen (14, 14a), wobei jedes der Vielzahl von Spektrogrammen ein Basisbandfrequenzspektrum (S5a) darstellt;
Sammeln von Spektrogrammdaten auf der Grundlage der aufgezeichneten Vielzahl von Spektrogrammen (14, 14a, S5b);
Bereitstellen der gesammelten Spektrogrammdaten als Trainingsdaten für das neuronale Netz (40, S5c).

10. Verfahren nach einem der vorhergehenden Ansprüche, wobei jeder Schritt (S1, S2, S3, S4) des Verfahrens ohne eine Abwärtskonvertierung einer Frequenz eines beliebigen der Vielzahl von Hochfrequenzsignalen (11, 11a, 11b, 11n) durchgeführt wird, die von den jeweiligen Hochfrequenzquellen (10, 10a, 10b, 10n) empfangen werden.

11. Verfahren nach einem der vorhergehenden Ansprüche, umfassend:
Identifizieren von erkannten graphischen Darstellungen (12, 12a, 12b, 12n) der Vielzahl von Hochfrequenzsignalen (11, 11a, 11b, 11n), für die eine Zuordnung zu einer entsprechenden Hochfrequenzquelle (10, 10a, 10b, 10n) nicht durchgeführt werden kann, zum Bereitstellen eines Satzes unbekannter grafischer Darstellungen (S4b).

12. Verfahren nach Anspruch 11, umfassend:
Verwenden des Satzes unbekannter grafischer Darstellungen und eines Selbstlernalgorithmus zum Erzeugen von Regeln für die Zuordnung jeder der unbekannten grafischen Darstellungen zu einer entsprechenden Hochfrequenzquelle (10, 10a, 10b, 10n, S4c) .

13. Verfahren nach einem der vorhergehenden Ansprüche, wobei das Zuordnen der erkannten grafischen Darstellungen (12, 12a, 12b, 12n) der Vielzahl von Hochfrequenzsignalen (11, 11a, 11b, 11n) zu einer entsprechenden Hochfrequenzquelle (10, 10a, 10b, 10n) umfasst:
Verwenden eines Wahrscheinlichkeitswertes, der eine Wahrscheinlichkeit angibt, mit der eine erkannte grafische Darstellung (12, 12a, 12b, 12n) eines Hochfrequenzsignals (11, 11a, 11b, 11n) einer Hochfrequenzquelle (10, 10a, 10b, 10n, S4d) entspricht.

14. Verfahren nach einem der vorhergehenden Ansprüche, wobei die Hochfrequenzquelle (10, 10a, 10b, 10n) aus einer Gruppe umfassend ein Radar, ein Bodenfahrzeug, ein Luftfahrzeug, ein Wasserfahrzeug, ein Raketensystem und ein tragbares mobiles Gerät ausgewählt ist.

15. Vorrichtung (1) zum Erkennen einer Hochfrequenzquelle (10), umfassend:
eine Empfangseinheit (2), die dafür ausgelegt ist, eine Vielzahl von Hochfrequenzsignalen (11, 11a, 11b, 11n) von entsprechenden Hochfrequenzquellen (10, 10a, 10b, 10n) zu empfangen, die sich in einer Umgebung (20) befinden;
eine Verarbeitungseinheit (3), die dafür ausgelegt ist, ein Hochfrequenzspektrogrammbild (30) zu erzeugen, das die Vielzahl von Hochfrequenzsignalen (11, 11a, 11b, 11n) darstellt, die von den jeweiligen Hochfrequenzquellen (10, 10a, 10b, 10n) empfangen werden, wobei das Hochfrequenzspektrogrammbild (30) das Ergebnis von grafischer Darstellung der Vielzahl von Hochfrequenzsignalen (11, 11a, 11b, 11n) in einem einzigen Bild ist;
wobei die Verarbeitungseinheit (3) ferner dafür ausgelegt ist, grafische Darstellungen (12, 12a, 12b, 12n) der Vielzahl von Hochfrequenzsignalen (11, 11a, 11b, 11n) in einzelnen definierten Bereichen (13, 13a, 13b, 13n) innerhalb des Hochfrequenzspektrogrammbildes (30) auf der Grundlage einer Bildmerkmalerkennung, die am Hochfrequenzspektrogrammbild (30) durchgeführt wird, zu erkennen;
wobei die Verarbeitungseinheit ferner dafür ausgelegt ist, ein neuronales Netz (40) zum Zuordnen mindestens einiger der erkannten grafischen Darstellungen (12, 12a, 12b, 12n) der Vielzahl von Hochfrequenzsignalen (11, 11a, 11b, 11n) zu einer entsprechenden Hochfrequenzquelle (10, 10a, 10b, 10n) zu verwenden.

## Revendications

1. Procédé de reconnaissance d'une source de fréquence radio (10), comprenant :
la réception d'une pluralité de signaux de fréquence radio (11, 11a, 11b, 11n) en provenance de sources de fréquence radio respectives (10, 10a, 10b, 10n) localisées dans un environnement (20, S1) ;
la génération d'une image de spectrogramme de fréquence radio (30) représentant la pluralité de signaux de fréquence radio (11, 11a, 11b, 11n) reçus depuis les sources de fréquence radio respectives (10, 10a, 10b, 10n, S2), dans lequel l'image de spectrogramme de fréquence radio (30) est le résultat de la représentation graphique de la pluralité de signaux de fréquence radio (11, 11a, 11b, 11n) dans une unique image ;
la détection de représentations graphiques (12, 12a, 12b, 12n) de la pluralité de signaux de fréquence radio (11, 11a, 11b, 11n) dans des régions définies individuelles (13, 13a, 13b, 13n) à l'intérieur de l'image de spectrogramme de fréquence radio (30) sur la base d'une reconnaissance de caractéristique(s) d'image réalisée sur l'image de spectrogramme de fréquence radio (30, S3) ;
l'utilisation d'un réseau neuronal (40) pour attribuer au moins certaines des représentations graphiques détectées (12, 12a, 12b, 12n) de la pluralité de signaux de fréquence radio (11, 11a, 11b, 11n) à une source de fréquence radio correspondante (10, 10a, 10b, 10n, S4).

2. Procédé selon la revendication 1, comprenant :
la fourniture d'une base de données (4) qui stocke des représentations graphiques (12', 12a', 12b', 12n') de signaux de fréquence radio (11, 11a, 11b, 11n, S0) ;
dans lequel l'attribution des représentations graphiques détectées (12, 12a, 12b, 12n) de la pluralité de signaux de fréquence radio (11, 11a, 11b, 11n) à une source de fréquence radio correspondante (10, 10a, 10b, 10n) comprend :
la comparaison des représentations graphiques détectées (12, 12a, 12b, 12n) de la pluralité de signaux de fréquence radio (11, 11a, 11b, 11n) avec les représentations graphiques stockées (12', 12a', 12b', 12n') de signaux de fréquence radio (11, 11a, 11b, 11n) en provenance de la base de données (4, S4a).

3. Procédé selon l'une quelconque des revendications précédentes,
dans lequel la détection de représentations graphiques (12, 12a, 12b, 12n) de la pluralité de signaux de fréquence radio (11, 11a, 11b, 11n) comprend :
la détection d'une représentation graphique distincte (12, 12a, 12b, 12n) de chacun de la pluralité de signaux de fréquence radio (11, 11a, 11b, 11n, S3a).

4. Procédé selon l'une quelconque des revendications précédentes, comprenant :
la réalisation de la reconnaissance de caractéristique(s) d'image en identifiant un motif d'image et/ou un code de couleur dans les régions définies individuelles (13, 13a, 13b, 13n) à l'intérieur de l'image de spectrogramme de fréquence radio (30, S3b).

5. Procédé selon l'une quelconque des revendications précédentes,
dans lequel la reconnaissance de caractéristique(s) d'image est réalisée simultanément dans au moins certaines des régions définies individuelles (13, 13a, 13b, 13n) à l'intérieur de l'image de spectrogramme de fréquence radio (30).

6. Procédé selon l'une quelconque des revendications précédentes,
dans lequel chacune des régions définies individuelles (13, 13a, 13b, 13n) à l'intérieur de l'image de spectrogramme de fréquence radio (30) est une partie d'image à l'intérieur de l'image de spectrogramme de fréquence radio (30) dans laquelle une représentation graphique respective (12) d'un signal de fréquence radio (11) est localisée.

7. Procédé selon l'une quelconque des revendications précédentes, comprenant :
la mise à l'écart de parties d'image à l'intérieur de l'image de spectrogramme de fréquence radio (30) dans lesquelles aucune représentation graphique (12, 12a, 12b, 12n) d'un signal de fréquence radio (11, 11a, 11b, 11n) n'est détectée (S3c).

8. Procédé selon l'une quelconque des revendications précédentes,
dans lequel l'image de spectrogramme de fréquence radio (30) représente un spectre de fréquences large bande incluant la pluralité de signaux de fréquence radio (11, 11a, 11b, 11n) reçus depuis les sources de fréquence radio respectives (10, 10a, 10b, 10n).

9. Procédé selon l'une quelconque des revendications précédentes, comprenant :
la collecte d'une pluralité de spectrogrammes (14, 14a), dans lequel chacun de la pluralité de spectrogrammes représente un spectre de fréquences de bande de base (S5a) ;
la collecte de données de spectrogramme sur la base de la pluralité enregistrée de spectrogrammes (14, 14a, S5b) ;
la fourniture des données de spectrogramme collectées en tant que données d'apprentissage au réseau neuronal (40, S5c).

10. Procédé selon l'une quelconque des revendications précédentes,
dans lequel chaque étape (S1, S2, S3, S4) du procédé est réalisée sans une conversion abaisseuse d'une fréquence de l'un quelconque de la pluralité de signaux de fréquence radio (11, 11a, 11b, 11n) reçus depuis les sources de fréquence radio respectives (10, 10a, 10b, 10n) .

11. Procédé selon l'une quelconque des revendications précédentes, comprenant :
l'identification de représentations graphiques détectées (12, 12a, 12b, 12n) de la pluralité de signaux de fréquence radio (11, 11a, 11b, 11n) pour lesquelles une attribution à une source de fréquence radio correspondante (10, 10a, 10b, 10n) ne peut pas être réalisée afin de fournir un ensemble de représentations graphiques inconnues (S4b).

12. Procédé selon la revendication 11, comprenant :
l'utilisation de l'ensemble de représentations graphiques inconnues et d'un algorithme à auto-apprentissage pour générer des règles pour attribuer chacune des représentations graphiques inconnues à une source de fréquence radio correspondante (10, 10a, 10b, 10n, S4c).

13. Procédé selon l'une quelconque des revendications précédentes,
dans lequel l'attribution des représentations graphiques détectées (12, 12a, 12b, 12n) de la pluralité de signaux de fréquence radio (11, 11a, 11b, 11n) à une source de fréquence radio correspondante (10, 10a, 10b, 10n) comprend :
l'utilisation d'une valeur de probabilité indicative d'une probabilité selon laquelle une représentation graphique détectée (12, 12a, 12b, 12n) d'un signal de fréquence radio (11, 11a, 11b, 11n) correspond à une source de fréquence radio (10, 10a, 10b, 10n, S4d).

14. Procédé selon l'une quelconque des revendications précédentes,
dans lequel la source de fréquence radio (10, 10a, 10b, 10n) est sélectionnée parmi un groupe, le groupe comprenant un radar, un véhicule terrestre, un véhicule aérien, un véhicule marin, un système de missiles et un dispositif mobile portable.

15. Dispositif (1) pour reconnaître une source de fréquence radio (10), comprenant :
une unité de réception (2) configurée pour recevoir une pluralité de signaux de fréquence radio (11, 11a, 11b, 11n) en provenance de sources de fréquence radio respectives (10, 10a, 10b, 10n) localisées dans un environnement (20) ;
une unité de traitement (3) configurée pour générer une image de spectrogramme de fréquence radio (30) représentant la pluralité de signaux de fréquence radio (11, 11a, 11b, 11n) reçus depuis les sources de fréquence radio respectives (10, 10a, 10b, 10n), dans lequel l'image de spectrogramme de fréquence radio (30) est le résultat de la représentation graphique de la pluralité de signaux de fréquence radio (11, 11a, 11b, 11n) dans une unique image ;
dans lequel l'unité de traitement (3) est en outre configurée pour détecter des représentations graphiques (12, 12a, 12b, 12n) de la pluralité de signaux de fréquence radio (11, 11a, 11b, 11n) dans des régions définies individuelles (13, 13a, 13b, 13n) à l'intérieur de l'image de spectrogramme de fréquence radio (30) sur la base d'une reconnaissance de caractéristique(s) d'image réalisée sur l'image de spectrogramme de fréquence radio (30) ;
dans lequel l'unité de traitement (3) est en outre configurée pour utiliser un réseau neuronal (40) pour attribuer au moins certaines des représentations graphiques détectées (12, 12a, 12b, 12n) de la pluralité de signaux de fréquence radio (11, 11a, 11b, 11n) à une source de fréquence radio correspondante (10, 10a, 10b, 10n) .
